# EUROPEAN PATENT SPECIFICATION

(11) **EP 1 505 885 B1**
(45) Date of publication and mention of the grant of the patent: **16.11.2005**
(21) Application number: 03718748.1
(22) Date of filing: 11.04.2003
(51) Int. Cl.: A23L 1/24, A23L 1/03, A23D 7/00, A23L 1/22

(54) **EDIBLE EMULSION COMPRISING LIVE MICRO-ORGANISMS**
ESSBARE EMULSION MIT LEBENDEN MIKROORGANISMEN
EMULSION COMESTIBLE CONTENANT DES MICRO-ORGANISMES VIVANTS

(30) Priority: 17.05.2002 EP 02291231
(43) Date of publication of application: 16.02.2005
(73) Proprietor: UNILEVER N.V., 3013 AL Rotterdam (NL); UNILEVER PLC, London, Greater London EC4P 4BQ (GB)
(72) Inventor: AGUILAR, Corinne, F-21000 DIJON (FR); BECK-TRESCOL, Laurence, Unilever Bestfoods France, F-21000 Dijon (FR); RIFFET, Christian, F-21270 Losne (FR)
(74) Representative: Tjon Tien Ril, Hon Kong Guno
(86) International application number: PCT/EP2003/003788
(87) International publication number: WO 2003/096823

(56) References cited:
- EP-A- 0 049 927
- EP-A- 0 689 773
- EP-A- 0 768 042
- WO-A-00/54600
- WO-A-02/30211
- GB-A- 1 527 526
- US-A- 1 697 312
- US-A- 3 025 165
- PATENT ABSTRACTS OF JAPAN vol. 004, no. 173 (C-032), 29 November 1980 (1980-11-29) -& JP 55 111771 A (WAKAYAMA HARUO), 28 August 1980 (1980-08-28) cited in the application
- DATABASE WPI Section Ch, Week 200216 Derwent Publications Ltd., London, GB; Class J02, AN 1994-097130 XP002215052 -& JP 2001 354506 A (TOSHIN KAGAKU KK), 25 December 2001 (2001-12-25) cited in the application

## Description

### FIELD OF THE INVENTION

The present invention relates to edible emulsions comprising live (desirable) micro-organisms. The invention particularly relates to edible oil-in-water emulsions comprising live micro-organisms in sufficient quantity to impart specific nutritional or taste properties to said edible emulsion, even after storage at refrigeration temperatures for several weeks.

### BACKGROUND OF THE INVENTION

It is known to be desirable to include live micro-organisms in edible emulsion products in order to provide specific nutritional properties to the consumer and/or specific organoleptic properties to the emulsion. For example, specific micro-organisms which are known to be beneficial to the maintenance or improvement of the health of the consumer may be included. Examples of such beneficial micro-organisms include those found in yoghurt and other milk cultures.

With the increasing interest from consumers in a healthy diet, it is becoming more important to provide different food products which comprise probiotics, such as bacteria, in order to meet the demands in the market place for such products.

Edible emulsions comprising live micro-organisms are disclosed in JP 62220186 and in our co-pending WO 02/30211.

It is known from these documents that when live micro-organisms are placed in contact with the external aqueous phase of an edible emulsion composition, they are generally destroyed in a relatively short time-scale. This results in problems in providing to the consumer an emulsion product comprising live micro-organisms. This problem is greater when edible acids are present in the external aqueous phase of the emulsion (for example for reasons of organoleptic properties).

The solution provided by JP62220186 and WO 02/30211 is to produce what is known in the art as a duplex emulsion, that is a water-in-oil-in-water emulsion, and to isolate the live micro-organisms within the primary water-in-oil emulsion.

Whilst these water-in-oil-in-water emulsions provide effective protection of, and thus longevity for, the micro-organisms the processes used to produce them are somewhat complicated and the physical format of the emulsion limits their formulation flexibility. It may also limit the concentration of the micro-organisms which can be included in the emulsion.

EP-A-689,773 discloses mayonnaise and dressing products comprising a gluconodelta lactose preservative system so that the pH of the product is 3.5 or less and which products are innoculated with Lactobacilli in order to test their resistance to bacterial spoilage.

FR 2 808 422 discloses a yoghurt dressing for a kebab, the dressing comprising about 75% by weight yoghurt and about 10% by weight mayonnaise. The dressing is presumably designed to be made and used within a short period of time. There is no disclosure as to whether the product comprises live micro-organisms.

GB 2 207 849 discloses a process to make a dairy based spread comprising live ferments. The ferments are said to have good longevity but are produced by a complicated process involving ultra-filtration and very specific heating conditions.

US 3 025 165 discloses butterfat-free yoghurt comprising relatively low levels of unsaturated oil or fat. It provides a palatable way of ingesting the oil.

US 1,697,312 discloses emulsion food products comprising a lactic acid producing organism, high levels of oil and an edible organic acid.

JP 55111771 discloses a dressing for treating geriatric and adult diseases. The dressing comprises mustard powder, pectin, bulgaria yoghurt and is an oil-in-water emulsion.

JP 2001354506-A-(J06047272) discloses oil-in-water emulsions comprising phospholipid emulsifier and having microbicide action.

There is a need in the art to provide edible emulsions comprising live micro-organisms, which emulsions show good longevity of the live micro-organisms. There is especially a need to provide such emulsions which are not complex emulsion systems.

There is also a need in the art to provide edible emulsions comprising live micro-organisms, which emulsions can be prepared by a straight-forward preparation process.

There is also a need in the art to provide edible emulsions comprising live micro-organisms having good formulation flexibility and which exhibit a commercially acceptable lifetime for the micro-organisms so that the desired benefits are delivered to the consumer.

Furthermore, there is a need in the art to provide edible emulsions which comprise at the time of consumption, amounts of desirable micro-organisms which are beneficial to the consumer but which do not comprise unacceptable, or health endangering, amounts of undesirable pathogens or spoilage yeasts or moulds.

It is known in the art to use pasteurisation or heat processing steps when preparing edible emulsions to ensure that the levels of these undesirable pathogens or spoilage yeasts or moulds are controlled. Disclosures of such heat-treatments are given, for example, in WO 94/09636, EP-A-049 927, WO 00/54600, EP-A-768 042 and Journal of Food Science Vol. 63, No. 4, 1998, page 702-705). The heat-treatment processes employed in the methods described in these prior art documents, are designed to kill the micro-organisms so that the final products do not comprise living beneficial micro-organisms unlike the present invention.

However, such heat treatment steps limit the processing flexibility for when live micro-organisms may be added and/or kill the micro-organisms and/or increase the cost and complexity of the production process.
It is an object of the invention to address one or more of the above-mentioned problems.

In particular, it is an object of the invention to provide edible emulsions comprising live desirable micro-organisms upon storage at refrigeration temperatures but not comprising unwanted levels of undesirable pathogens or spoilage yeasts or moulds.

It is further object of the invention to provide edible emulsions which comprise an acceptable level of live desirable micro-organisms after at least 3 weeks storage at 8°C but which do not comprise unwanted levels of pathogens or spoilage yeasts or moulds, so as to provide the benefits of the live desirable micro-organisms to the consumer. The emulsion is thus provided with specific nutritional and/or taste properties.

It is a further object of the invention to provide such edible emulsions which are not subject to disadvantageous emulsion-phase volume restrictions in the concentration of the live micro-organisms which can be incorporated in the emulsions.

Furthermore, it is an object of the invention to provide edible emulsions which have good formulation flexibility with regard to the type and/or amount of the micro-organism which can be incorporated.

Traditional mayonnaise is an oil-in-water emulsion comprising vegetable oil (75-80%), egg yolk (5-8%), salt, vinegar, and optionally sugar, mustard, pepper and herbs. Traditional mayonnaise usually has a pH about 3.7 to 4.2 and the oil is generally present as droplets dispersed in a water phase. From the droplet size and the high amount of dispersed phase, the close packing of oil droplets gives the typical rheological behaviour of mayonnaise, which is perceived by consumers as thickness.

There is an increasing demand from consumers for mayonnaise-type products and dressings having a low content of oil but without compromising the sensorial properties associated with full fat mayonnaise such as thickness and mouthfeel. The low-oil content products are perceived as healthier by the consumer than their full-oil content equivalents.

It is a further object of the invention to provide low-oil content mayonnaises and dressings comprising advantageous levels of desirable live micro-organisms upon consumption.
These products are considered by the consumer to provide a good combination of beneficial live micro-organisms with reduced oil content of the product.

### Definitions

The term "live (desirable) micro-organisms" as used herein, refers to micro-organisms including bacteria which it is desired to include in the edible emulsion and which are alive. These micro-organisms typically impart a health or organoleptic property to the edible emulsion.

The term "pathogen" as used herein, refers to micro-organisms which it is not desired to include, or allow to proliferate, in the edible emulsion. Examples include micro-organisms known to cause food poisoning.

The term "spoilage yeasts or moulds" as used herein refers to such yeasts or moulds which can cause food spoilage, for example, by gas formation in the product or mould or spore growth on the product surface.

An "oil-in-water emulsion" as used herein refers to an emulsion which is a dispersed oil phase in a continuous water phase. It does not include water-in-oil-in-water emulsions.

### SUMMARY OF THE INVENTION

We have surprisingly found that one or more of the above aims can be achieved by an edible oil-in-water emulsion comprising a given oil content, live desirable micro-organisms, a preservation system against pathogens and spoilage yeasts or moulds, and which emulsion has a given acid content in the aqueous phase of the emulsion and a given pH.

The present invention therefore provides, according to a first aspect, an edible oil-in-water emulsion comprising from 30 to 75% wt oil, water, live micro-organisms, and a preservation system, and having an edible acid content in the aqueous continuous phase of the emulsion in the range of from 0.1 to 3% by weight and a pH at 20°C of not less than 4.0.

It is especially preferred that the emulsions have an edible acid content in the aqueous continuous phase of the emulsion in the range of from 0.2 to 1.5% by weight

It is further preferred that the oil-in-water emulsions have a pH at 20°C of not less than 4.0, preferably in the range of from 4.2 to 5.0. It has been found to be particularly advantageous if the emulsion has a pH at 20°C in the range of from 4.4 to 4.8 and an edible acid content in the aqueous continuous phase of from 0.3 to 0.75 or 0.8% by weight.

It is preferred that the oil-in-water emulsions are stored at a temperature of 8°C or less after preparation, more preferably at a temperature of 6°C or less, such as 5°C or less. It is also preferred that the oil in water emulsion comprises live micro-organisms after 3 weeks storage at 8°C.

The oil-in-water emulsions of the invention have been found to show good longevity of the desirable micro-organisms and not to suffer from unacceptable contamination by pathogens or spoilage yeasts or moulds.

Except in the operating and comparative examples, or where otherwise explicitly indicated, all numbers in this description indicating amounts of material or conditions of reaction, physical properties of materials and/or use are to be understood as modified by the word "about." All amounts and percentages are by weight, based on the total weight of the composition, unless otherwise specified.

The term "comprising" is meant not to be limiting to any subsequently stated elements but rather to encompass non-specified elements of major or minor functional importance. In other words the listed steps, elements or options need not be exhaustive. Whenever the words "including" or "having" are used, these terms are meant to be equivalent to "comprising" as defined above.

### DETAILED DESCRIPTION OF THE INVENTION

The invention will now be discussed in greater detail.

### Product details

### (i) aqueous acid content and edible acids

The control of the edible acid content of the aqueous continuous phase of the emulsion is believed to provide good results according to the present invention.

It is often necessary to provide an acidic taste to oil-in-water emulsions. It is known from the prior art that high levels of acid in the aqueous continuous phase of the emulsion can adversely affect the longevity of the desirable micro-organisms. For example, our co-pending WO 02/30211 discloses that live micro-organisms are susceptible to attack from the acidity of an aqueous phase in a mayonnaise type product.

The oil-in-water emulsions comprise an amount of from 0.1 to 3% by weight of edible acid content in the aqueous continuous phase of the emulsion, more preferably 0.2 to 1.5%, most preferably 0.25 to 1.3% by weight. Especially good results have been obtained with edible acid contents in the range of 0.3 to 0.7 or 0.8% by weight.

The edible acid content in the aqueous continuous phase of the emulsion, as referred to herein, refers to the total acid content of the aqueous phase expressed as the equivalent weight percentage of acetic acid. It is calculated by assuming that all the edible acid is present in the aqueous phase, with the aqueous phase being made up of the water and all water-soluble ingredients. The total edible acid content may of course comprise more than one type of edible acid, for example a mixture of acetic acid, citric acid and lactic acid but the edible acid content herein is expressed as the equivalent amount of acetic acid content.

The oil-in-water emulsions comprise in the aqueous phase at least one edible acid, preferably selected from acetic acid, citric acid, lactic acid, phosphoric acid, hydrochloric acid, malic acid, tartaric acid, gluconic acid and mixtures thereof. Especially preferred are organic acids, especially acetic acid, citric acid, and mixtures thereof.

The edible acid is believed to substantially remain in the aqueous continuous phase of the oil-in-water emulsion. Thus it has surprisingly been found that when the edible acid content in the aqueous phase is controlled to within the limits according to the invention, it does not unacceptably affect the live micro-organisms which are also believed to be present in the aqueous continuous phase, contrary to what is expected from the teaching of the prior art.

The presence of the edible acid can aid in the inhibition of the growth of pathogens and food spoilage yeasts or moulds but if does not form a part of the preservation system as herein defined.

### (ii) Live micro-organisms

The live micro-organisms may be selected from any live micro-organisms which it is desirable to include in food products. Preferred micro-organisms are bacteria based on lactic ferments, lactic yeasts or lactic bacteria per se, or based upon a simple of complex mixture of any such ferments, yeasts or bacteria.

It is especially preferred that the live micro-organisms (lactic bacteria) are selected from the following strains: Lactobacillus Bulgaricus, lactobacillus Casei, Lactobacillus Acidophilus, Lactococcus Lactis, Streptococcus Thermophilus, Bifidobacterium Bifidum, Bifidobacterium Lingum and mixtures thereof, especially from Lactobacillus Bulgaricus and Streptococcus Thermophillus or a mixture thereof.

The live micro-organisms are present in the aqueous continuous phase of the oil-in-water emulsion.

In order to increase the longevity of the micro-organisms in the oil-in-water emulsions, the oil-in-water emulsions are preferably stored at below ambient temperature and preferably at a maximum of 8°C after the preparation process and until purchase (and preferably consumption) by the consumer. Storage at a maximum of 6°C or 5°C is very preferred.

It is especially preferred that live desirable micro-organisms can be detected in the oil-in-water emulsions after storage at a maximum temperature of 8°C for at least 3 weeks, preferably after 6 weeks. Storage temperatures of about 5°C or less have been found to be even more effective.

A preferred level of live micro-organisms in the product after the above-mentioned storage time is at least 10⁵ or 10⁶ bacteria per gram of emulsion.

The live micro-organisms may be included in the oil-in-water emulsion either by their direct addition or by the addition of a product comprising them. Preferably, they are present from the inclusion of an edible live micro-organism containing product.

The addition of the edible live micro-organism containing product, has the advantage that its taste may be imparted to the edible oil-in-water emulsion. The edible live micro-organism containing product may be any suitable dairy based, fruit based or vegetable based product. Suitable examples include yoghurt or soy-bean products, especially yoghurt.

It is preferred that the oil-in-water emulsion comprises an amount of from 5 to 50% by weight of the edible live micro-organism containing product, more preferably 10 to 35% by weight, most preferably 15 to 25% by weight.

### (iii) pH

The pH at 20°C of the oil-in-water emulsion is preferably not less than 4.0, more preferably not less than 4.2, most preferably in the range of from 4.2 to 5.0, especially in the range of from 4.4 to 4.8.

It is preferred that the emulsion has a pH at 20°C of not less than 4.0 and comprises of from 0.1 to 1.0% by weight of edible acid content in the aqueous phase of the emulsion. It is especially preferred that the emulsion has a pH at 20°C in the range of from 4.4 to 4.8 and comprises an amount of from 0.3 to 0.75 or 0.8 % by weight of edible acid content in the aqueous phase of the emulsion.

### (iv) Water

The oil-in-water emulsions preferably comprise an amount of from 15 to 60% by weight of water, more preferably 20 to 50% by weight, most preferably 25 to 40% by weight.

### (v) Oil

The oil used to prepare the oil-in-water emulsions may be any edible oil which is substantially liquid at room temperature. Oils of vegetable origin are preferred, especially triglyceride oils. Most preferred are corn, olive, soy bean, palm, sesame, safflower, canola, linseed oil or mixtures thereof. Sunflower oils and olive oils are most preferred.

Although a wide variety of fat levels may be used in the oil-in-water emulsions of the invention, it is preferred that they comprise an amount of from about 35-70% by weight of oil.

### (vi) Preservation system

The oil-in-water emulsions comprise a preservation system which is active against pathogens and food spoilage yeasts or moulds. Any such preservation system conventionally used in edible food emulsions may be used. It is especially preferred that the preservation system comprises allyl isothiocyanate or sorbate salts such as sodium or potassium sorbate and mixtures thereof. The allyl isothiocyanate may be included in the emulsion either as mustard, mustard extract or as the isolated ingredient. A mixture of allyl isothiocyanate and potassium or sodium sorbate has been found to be particularly effective.

The preservation system is preferably present in an amount of from 0.01 to 1% by weight, more preferably in an amount of from 0.05 to 0.5% by weight based on the weight of the oil-in-water emulsions.

### (vii) Emulsifier

The oil-in-water emulsion preferably comprises an emulsifier. Any suitable hydrophilic edible emulsifier may be used.

Preferred are egg yolk derived emulsifiers or milk protein derived emulsifiers.

If the emulsifier is an-egg yolk derived emulsifier, it is preferably selected from egg yolk, stabilised egg yolk, fortified stabilised egg mix, dried egg yolk, salted egg yolk, enzymatically treated egg yolk and whole eggs. Salted egg yolk is especially preferred. Suitable milk protein derived emulsifiers include whey protein or a casein salt.

The oil-in-water emulsions preferably comprise an amount of from about 0.05 to 8% by weight, more preferably from about 0.1 to 70%, of emulsifier. In general lower amounts of the milk protein derived emulsifiers are needed than of the egg yolk derived emulsifier.

### (viii) Optional ingredients

The oil-in-water emulsions of the invention may comprise optional ingredients selected from flavourings, aromas, colourings, stabilisers and thickeners. Such ingredients may be in a liquid or semi-liquid form. Flavour ingredients may be based on, for example: mustard, salt and pepper, sugar, flavouring herbs, flavouring vegetables (garlic, onions, etc). Thickeners may be based on, for example: starches and gums.

Lowering the amount of oil in an otherwise standard mayonnaise or spread formulation, leads to a less dense packing of the oil droplets in the water phase resulting in a reduced viscosity and/or thickness. Such a product will be pourable rather than spoonable or spreadable. To overcome this problem thickeners such as starch or gums may be used to increase thickness (viscosity) of the formulation.

The compositions according to the invention may comprise natural gums, and/or oligo- and polysaccharides and/or starch or modified starch in order to prevent syneresis or to improve long-term stability of the emulsion.

The amount of these optional ingredients will depend upon the type of ingredient included but will typically be in the range of from 0.05 to 2 or 5% by weight per type of ingredient (individual flavour etc). The total amount of these ingredients will typically be in the range of from 0.5 to 10 or 15% by weight of the oil-in-water emulsion.

### Types of product

The edible oil-in-water emulsions of the invention may be used in, or as, many types of culinary products, for example mayonnaise (including the so-called low-fat mayonnaises), side sauces and dressings such as those for salads. A side sauce is a sauce that is served as a separate accompaniment to another food with which it is eaten e.g. a dipping sauce. A dressing is served in contact with the food with which it is eaten. The products are preferably spoonable or pourable. Other preferred embodiments of the invention are side sauces having a low level of oil.

The products according to the invention are preferably stored at temperatures below ambient temperatures, especially at or below 8°C, most especially at or below 6°C or 5°C prior to consumption to aid the longevity of the desirable micro-organisms and inhibit the growth of spoilage yeasts or moulds.

Low-fat products (that is products specifically formulated to have a lower fat content than their full fat equivalents) are particularly preferred according to the present invention, for example low fat mayonnaise and dressings having a fat content of less than 55% by weight.

### Preparation of the oil-in-water emulsions

The oil-in-water emulsions may-be produced by any suitable, conventional method known in the art, providing that the live micro-organisms are not destroyed in the preparation process. For example, the emulsions may be produced by a process involving a heat treatment step, if the live micro-organisms are added after that step or the temperature or duration of the step is not sufficient to kill (e.g. in significant numbers) the micro-organisms.

It is especially preferred, however, that the oil-in-water emulsions of the invention are produced by a process as described below.

### (i) emulsification of an edible mixture

The processes preferably comprises the step of the emulsification of an edible mixture comprising oil, water, live micro-organisms, emulsifier and a preservation system against pathogens or spoilage yeasts or moulds. This emulsification step may be carried out according to any suitable method known in the art. Typically the ingredients are mixed together to form the mixture which is then subjected to a shear-mixing operation to form the emulsion.

The emulsification step may typically take between 0.5 and 10 minutes, more preferably between 1 and 7 minutes, most preferably between 2 and 6 minutes, depending upon the level of shear applied and the ingredients used. The emulsification step is continued for the time necessary to produce an oil-in-water emulsion.

Other optional ingredients such as flavourings, colourings, aromas, thickeners, stabilisers and organic acids may also be present in the edible mixture when it is emulsified.

The process is preferably carried out at a temperature of 35°C or less. It is possible that the process may go slightly above the given temperatures for very limited periods of time providing that the process is carried out substantially at the given temperature. It is preferred that the process is carried at a temperature of 30°C or less, more preferably 25°C or less, most preferably 20°C or less.

The process may also be carried out without a heat treatment step. As the ambient temperature of different countries or seasons varies, the exact temperature at which this aspect is carried out may vary. However, it is not anticipated that the process will be carried out at temperatures substantially above 35°C. The limitation to the "no heat treatment step" being used in the process does not extend to any heat-treatment step which may have been applied to the individual ingredients during their manufacture.

### (ii) optional formation of a first emulsified mixture a)

The above process step (i) of the emulsification of an edible mixture may be preceded by a process step wherein the oil, water, live micro-organisms, emulsifier and preservation system are emulsified together to form a first emulsified mixture a). This first emulsified mixture a) is subsequently subjected to at least one further processing step, which preferably includes at least one further emulsification step, to form the edible oil-in-water emulsion. The further processing steps will include the step of emulsifying the edible mixture. The process used to produce the first emulsified mixture a) may be any suitable process known in the art.

It is possible that the edible mixture and the first emulsified mixture a) are of identical compositions. However, more typically, an addition of further ingredients will be made to the first emulsified mixture a) prior to the further process step of the emulsification of the edible mixture.

The first emulsified mixture a) may further comprise at least one ingredient selected from flavourings, aromas, colourings, stabilisers, organic acids and thickeners.

The temperatures of the process steps to form the emulsion of the edible mixture and the first emulsified mixture a) may be different provided that the above provisions of temperature control are met. Preferably the temperature of the two process steps, if both are used, does not vary by more than 10°C, preferably not more than 5°C. It is especially preferred that substantially the same temperature is used in both steps.

Suitable timings of the emulsification step to produce the first emulsified mixture a) are the same as for the emulsification of the edible mixture.

### (iii) addition of the edible acid

The edible acid may be added to the edible oil-in-water emulsion, the first emulsified mixture a) or to at least one of the emulsion ingredients.

It is preferred that the edible acid is added to the emulsified mixture a) to produce the edible mixture which is then emulsified to produce the edible oil-in-water emulsion.

### (iv) addition of the raw materials

The raw materials used to form the oil-in-water emulsions may be subjected to stirring or other mixing operations (such as grinding) before the emulsification processing steps. It is within the ability of the person skilled in the art to determine suitable mixing times and methods.

### (v) other points

The temperature of the process should ideally not vary more than by about 10°C during the entire process, preferably not more than by about 5°C.

It is also preferred that the process does not comprise an ultra-filtration step. This has been found to be unnecessary and only increases the cost and complexity of the process.

The emulsification process may be carried out using known emulsifying devices such as mixers or blenders. Alternatively an homogeniser, such as a high-pressure homogeniser may be used. Preferred pressure ranges for the homogeniser are between 20 and 400 bar.

According to an especially preferred process the oil, at least a part of the preservative system and optionally thickeners and flavouring agents are mixed together. The water, live micro-organisms or product comprising them, optional flavourings and aromas, a further part of the preservation system (e.g. potassium sorbate) if used and the emulsifier are added thereto and the resulting mixture is emulsified to produce a first emulsified mixture a). The edible acids are added thereto to produce the final edible mixture which is then subjected to further emulsification step to produce the edible oil-in-water emulsion.

The process is a simple one for producing oil-in-water emulsions comprising live desirable micro-organisms. The proliferation of undesirable pathogens and spoilage yeasts and moulds is avoided and the desirable micro-organisms have been found to remain alive for commercially acceptable periods of time.

The present invention will be further explained with reference to the following non-limiting examples. Further examples within the scope of the invention will be apparent to the person skilled in the art.

### EXAMPLES

A series of low-oil content mayonnaises, examples 1 to 5, were prepared as detailed below in table 1. All percentages are by weight, based on the weight of the composition, unless otherwise stated.

**Table 1**

| | 1 | 2 | 3 | 4 | 5 |
|---|---|---|---|---|---|
| Water | 30.63 | 30.13 | 29.63 | 29.13 | 28.63 |
| Sunflower oil | 39.0 | 39.0 | 39.0 | 39.0 | 39.0 |
| Yoghurt*1 | 20.0 | 20.0 | 20.0 | 20.0 | 20.0 |
| Salted egg yolk emulsifier (11.25%wt) | 5.50 | 5.50 | 5.50 | 5.50 | 5.50 |
| Potassium sorbate | 0.2 | 0.2 | 0.2 | 0.2 | 0.2 |
| Pre-cooked starch and gum | 2.70 | 2.70 | 2.70 | 2.70 | 2.70 |
| Flavourings and salt | 0.87 | 0.87 | 0.87 | 0.87 | 0.87 |
| Spirit vinegar (10%wt) | 1.0 | 1.5 | 2.0 | 2.5 | 3.0 |
| Mustard flavour | 0.05 | 0.05 | 0.05 | 0.05 | 0.05 |
| Conc. lemon juice (45 brix) | 0.05 | 0.05 | 0.05 | 0.05 | 0.05 |
| Total (%wt) | 100.0 | 100.0 | 100.0 | 100.0 | 100.0 |

| | | | | | |
|---|---|---|---|---|---|
| *1 yoghurt comprises Lactobacillus Bulgaricus + Streptococcus Thermophilus | | | | | |

The samples were made by mixing together the sunflower oil, flavourings, mustard flavour, pre-cooked starch and gum and subjecting them to a mild grinding operation for about 3 to 5 minutes to produce a substantially homogenous mixture. To this mixture was added the water, yoghurt, salt, potassium sorbate and the emulsifier. The resultant mixture was mixed for about 4 to 9 minutes to obtain a first emulsified mixture. To this first emulsified mixture was added the spirit vinegar and the lemon juice concentrate and the mixture was again mixed to produce the edible oil-in-water emulsion. If required, the oil-in-water emulsion may be subjected to a de-aerating step. The process was carried out at a temperature which was maintained at below 20°C.

Portions were removed from the samples and tested for the concentration of desirable micro-organisms present (L. Bulgaricus + S. Thermophilus). The samples were then stored at 8°C, with samples taken at 1, 2 and 3 months to determine the concentration of desirable micro-organisms present. The physical parameters of the samples are given in table 2 and the results of the evaluation for the longevity of the desirable micro-organisms are given in table 3.

**Table 2**

| | 1 | 2 | 3 | 4 | 5 |
|---|---|---|---|---|---|
| pH at 20°C | 4.68 | 4.57 | 4.46 | 4.36 | 4.3 |
| aqueous edible acid content | 0.40 | 0.51 | 0.58 | 0.69 | 0.72 |
| dry extract | 44 | 44 | 44 | 44 | 44 |

**Table 3**

| Concentration of L. Bulgaricus & S. Thermophilus after 8°C storage. | 1 | 2 | 3 | 4 | 5 |
|---|---|---|---|---|---|
| Initial | 5.00E+ 07 | 8.00E+ 07 | 1.06E+ 08 | 5.30E+ 07 | 8.60E+ 07 |
| 1 month | 5.20E+ 07 | 2.60E+ 07 | 9.00E+ 06 | 3.40E+ 07 | 1.70E+ 07 |
| 2 months | 5.60E+ 07 | 3.50E+ 07 | 1.70E+ 06 | 1.10E+ 06 | 1.00E+ 06 |
| 3 months | 7.0E+ 05 | 1.3E+ 05 | 1.3E+ 06 | 8.0E+ 05 | 4.0E+ 06 |

The above results demonstrate that by using a preservation system, an edible acid content and a pH in the range according to the invention, mayonnaise products can be produced which have good longevity for desirable micro-organisms even after storage for 2 or 3 months at 8° C.

### Example 6

Example 3 was repeated as detailed above and stored at 4°C and 8°C to assess the effects of storage at a lower temperature. The results are given in table 4.

**Table 4**

| Concentration of L. Bulgaricus S. Thermophilus after storage. | 4°C | 8°C |
|---|---|---|
| Initial | 9.4E+07 | 9.4E+07 |
| 1 month | 2.4E+07 | 6.6E+07 |
| 2 months | 6.6E+06 | 2.2E+05 |
| 3 months | 2.2E+05 | 2.6E+04 |

The above results demonstrate that by using a storage temperature of 4°C, better longevity of the desirable micro-organisms is obtained.

### Example 7

Examples 1 to 5 were repeated but using stabilised egg-yolk emulsifier. The products were pasteurised at 80°C. No live L. Bulgaricus & S. Thermophilus were detected in the products after pasteurisation and so the products were not put on storage tests.

### Example 8

Example 8 was prepared using the same process as in Examples 1 to 5. The composition is given in table 5 below.

**Table 5**

| | % wt |
|---|---|
| Water | 29.83 |
| Sunflower oil | 39.05 |
| Yoghurt | 20.00 |
| Salted egg yolk emulsifier (11.25% wt) | 5.50 |
| Pre-cooked starch & gum | 2.60 |
| Flavours | 0.02 |
| Salt | 0.80 |
| Vinegar (10%) | 2.00 |
| Conc. Lemon juice (45 brix) | 0.05 |
| Xanthan gum | 0.10 |
| Liquid pepper | 0.05 |
| Total | 100.00 |

The composition had a pH at 20°C of about 4.1 and an aqueous edible acid content of 0.58.

The composition comprised no preservative. After 1 week of storage at 15°C microbiological spoilage of the product was detected which rendered the compositions unfit for human consumption. As a comparative example, an amount of 0.2%wt (based on the total weight of the composition) of the water in Example 8 was replaced by 0.2%wt potassium sorbate (thus 29.63% wt water and 0.2% wt potassium sorbate). No microbiological spoilage of the product was detected after 1 week storage at 15°C.

## Claims

1. An edible oil-in-water emulsion comprising from 30 to 75% wt oil, water, live micro-organisms, and a preservation system, and having an edible acid content in the aqueous continuous phase of the emulsion in the range of from 0.1 to 3% by weight and a pH at 20°C of not less than 4.0.

2. An edible oil-in-water emulsion according to claim 1, having an edible acid content in the aqueous continuous phase of the emulsion in the range of from 0.2 to 1.5 % by weight.

3. An edible oil-in-water emulsion according to either claim 1 or 2 and having a pH at 20°C in the range of from 4.2 to 5.0.

4. An edible oil-in-water emulsion according to any one of the preceding claims wherein the emulsion has a pH at 20°C in the range of from 4.4 to 4.8 and an edible acid content in the aqueous continuous phase of from 0.3 to 0.8% by weight.

5. An edible oil-in-water emulsion according to any one of the preceding claims comprising live micro-organisms after 3 weeks storage at 8°C.

6. An edible oil-in-water emulsion according to any one of the preceding claims, wherein the live micro-organisms are included in the oil-in-water emulsion by the inclusion of an edible live micro-organism-containing product.

7. An edible oil-in-water emulsion according to claim 6, wherein the edible live micro-organism-containing product is yoghurt.

8. An edible oil-in-water emulsion according to either of claims 6 or 7, wherein the oil-in-water emulsion comprises of from 5 to 50% by weight of the live micro-organism-containing product.

9. An edible oil-in-water emulsion according to any one of the preceding claims, wherein the live micro-organisms are selected from bacteria based on lactic ferments, lactic yeasts or lactic bacteria, and mixtures thereof.

10. An edible oil-in-water emulsion according to claim 9, wherein the lactic bacteria are selected from the following strains: Lactobacillus Bulgaricus, lactobacillus Casei, Lactobacillus Acidophilus, Lactococcus Lactis, Streptococcus Thermophilus, Bifidobacterium Bifidum, Bifidobacterium Lingum and mixtures thereof.

11. An edible oil-in-water emulsion according to any one of the preceding claims, comprising of from 35-70% by weight of oil.

12. An edible oil-in-water emulsion according to any one of the proceding claims, comprising of from 30-55% by weight of oil.

13. An edible oil-in-water emulsion according to any one of the preceding claims, wherein the preservation system comprises allyl isothiocyanate, sorbate salts or mixtures thereof.

14. An edible oil-in-water emulsion according to any one of the preceding claims, wherein the emulsion comprises an emulsifier.

15. An edible oil-in-water emulsion according to any one of the preceding claims, wherein the oil-in-water emulsion is a mayonnaise, dressing or side sauce.

## Patentansprüche

1. Essbare Öl-in-Wasser-Emulsion, umfassend 30 bis 75 Gewichtsprozent Öl, Wasser, Lebendmikroorganismen und ein Konservierungssystem und mit einem Anteil an essbarer Säure in der wässrigen kontinuierlichen Phase der Emulsion im Bereich von 0,1 bis 3 Gewichtsprozent und einem pH-Wert bei 20°C von nicht weniger als 4,0.

2. Essbare Öl-in-Wasser-Emulsion nach Anspruch 1, mit einem Anteil an essbarer Säure in der wässrigen kontinuierlichen Phase der Emulsion im Bereich von 0,2 bis 1,5 Gewichtsprozent.

3. Essbare Öl-in-Wasser-Emulsion nach entweder Anspruch 1 oder Anspruch 2 und mit einem pH-Wert bei 20°C im Bereich von 4,2 bis 5,0.

4. Essbare Öl-in-Wasser-Emulsion nach einem der vorangehenden Ansprüche, worin die Emulsion einen pH-Wert bei 20°C im Bereich von 4,4 bis 4,8 aufweist und einen Gehalt an essbarer Säure in der wässrigen kontinuierlichen Phase von 0,3 bis 0,8 Gewichtsprozent aufweist.

5. Essbare Öl-in-Wasser-Emulsion nach einem der vorangehenden Ansprüche, umfassend Lebendmikroorganismen nach 3 Wochen Lagerung bei 8°C.

6. Essbare Öl-in-Wasser-Emulsion nach einem der vorangehenden Ansprüche, wobei die Lebendmikroorganismen in die Öl-in-Wasser-Emulsion durch Einschluss eines essbaren Lebendmikroorganismus enthaltenden Produkts eingeschlossen sind.

7. Essbare Öl-in-Wasser-Emulsion nach Anspruch 6, worin das essbare Lebendmikroorganismen enthaltende Produkt Joghurt ist.

8. Essbare Öl-in-Wasser-Emulsion nach einem der Ansprüche 6 oder 7, worin die Öl-in-Wasser-Emulsion 5 bis 50 Gewichtsprozent des Lebendmikroorganismus enthaltenden Produkts umfasst.

9. Essbare Öl-in-Wasser-Emulsion nach einem der vorangehenden Ansprüche, worin die Lebendmikroorganismen aus Bakterien, die auf Milchfermenten, Milchhefen oder Milchsäurebakterien basieren, und Gemischen davon, ausgewählt sind.

10. Essbare Öl-in-Wasser-Emulsion nach Anspruch 9, worin die Milchsäurebakterien aus den nachstehenden Stämmen: Lactobacillus bulgaricus, Lactobacillus casei, Lactobacillus acidophilus, Lactococcus lactis, Streptococcus thermophilus, Bifidobakterium bifidum, Bifidobakterium lingum und Gemischen davon ausgewählt sind.

11. Essbare Öl-in-Wasser-Emulsion nach einem der vorangehenden Ansprüche, umfassend 35 bis 70 Gewichtsprozent Öl.

12. Essbare Öl-in-Wasser-Emulsion nach einem der vorangehenden Ansprüche, umfassend 30 bis 55 Gewichtsprozent Öl.

13. Essbare Öl-in-Wasser-Emulsion nach einem der vorangehenden Ansprüche, worin das Konservierungssystem Allylisothiocyanat, Sorbatsalze oder Gemische davon umfasst.

14. Essbare Öl-in-Wasser-Emulsion nach einem der vorangehenden Ansprüche, worin die Emulsion einen Emulgator umfasst.

15. Essbare Öl-in-Wasser-Emulsion nach einem der vorangehenden Ansprüche, worin die Öl-in-Wasser-Emulsion eine Mayonnaise, ein Dressing oder eine Beilagensauce ist.

## Revendications

1. Emulsion huile dans l'eau comestible comprenant de 30 à 75 % en poids d'huile, d'eau, de micro-organismes vivants et un système de conservation, et ayant une teneur en acide comestible dans la phase aqueuse continue de l'émulsion située dans la plage allant de 0,1 à 3 % en poids et un pH à 20 °C n'étant pas inférieur à 4,0.

2. Emulsion huile dans l'eau comestible selon la revendication 1, ayant une teneur en acide comestible dans la phase aqueuse continue de l'émulsion située dans la plage allant de 0,2 à 1,5 % en poids.

3. Emulsion huile dans l'eau comestible selon l'une ou l'autre des revendications 1 et 2 et ayant un pH à 20 °C situé dans la plage allant de 4,2 à 5,0.

4. Emulsion huile dans l'eau comestible selon l'une quelconque des revendications précédentes, où l'émulsion a un pH à 20 °C situé dans la plage allant de 4,4 à 4,8 et une teneur en acide comestible dans la phase aqueuse continue située dans la plage allant de 0,3 à 0,8 % en poids.

5. Emulsion huile dans l'eau comestible selon l'une quelconque des revendications précédentes, comprenant des micro-organismes vivants après 3 semaines de stockage à 8 °C.

6. Emulsion huile dans l'eau comestible selon l'une quelconque des revendications précédentes, où les micro-organismes vivants sont inclus dans l'émulsion huile dans l'eau par l'inclusion du produit contenant les micro-organismes vivants comestibles.

7. Emulsion huile dans l'eau comestible selon la revendication 6, où le produit contenant les micro-organismes vivants comestibles est un yoghourt.

8. Emulsion huile dans l'eau comestible selon l'une ou l'autre des revendications 6 et 7, où l'émulsion huile dans l'eau comprend de 5 à 50 % en poids du produit contenant les micro-organismes vivants.

9. Emulsion huile dans l'eau comestible selon l'une quelconque des revendications précédentes, dans laquelle les micro-organismes vivants sont choisis parmi des bactéries basées sur des ferments lactiques, des levures lactiques ou des bactéries lactiques et des mélanges de ceux-ci.

10. Emulsion huile dans l'eau comestible selon la revendication 9, dans laquelle les bactéries lactiques sont choisies parmi les souches suivantes : Lactobacillus Bulgaricus, lactobacillus Casei, Lactobacillus Acidophilus, Lactococcus Lactis, Streptococcus Thermophilus, Bifidobacterium Bifidum, Bifidobacterium Lingum et des mélanges de celles-ci.

11. Emulsion huile dans l'eau comestible selon l'une quelconque des revendications précédentes, comprenant de 35 à 70 % en poids d'huile.

12. Emulsion huile dans l'eau comestible selon l'une quelconque des revendications précédentes, comprenant de 30 à 55 % en poids d'huile.

13. Emulsion huile dans l'eau comestible selon l'une quelconque des revendications précédentes, dans laquelle le système de conservation comprend un allyl isothiocyanate, des sels sorbates ou des mélanges de ceux-ci.

14. Emulsion huile dans l'eau comestible selon l'une quelconque des revendications précédentes, où l'émulsion comprend un émulsifiant.

15. Emulsion huile dans l'eau comestible selon l'une quelconque des revendications précédentes, où l'émulsion huile dans l'eau est une mayonnaise, un assaisonnement ou une sauce d'accompagnement.
